# EUROPEAN PATENT APPLICATION

(11) **EP 4 312 179 A1**
(43) Date of publication of application: **31.01.2024**
(21) Application number: 22779519.2
(22) Date of filing: 04.02.2022
(51) Int. Cl.: G06Q 50/08

(54) **STRUCTURE STATE PREDICTION DEVICE, METHOD, AND PROGRAM**

(30) Priority: 30.03.2021 JP 2021057277
(71) Applicant: FUJIFILM Corporation, Tokyo 106-8620 (JP)
(72) Inventor: OZEKI Makoto, Tokyo 106-8620 (JP)
(74) Representative: Meissner Bolte Partnerschaft mbB
(86) International application number: PCT/JP2022/004503
(87) International publication number: WO 2022/209290

(57) **Abstract**

Provided are a structure state prediction apparatus, a structure state prediction method, and a structure state prediction program that enable highly accurate deterioration prediction to be performed on an individual structure in a versatile manner at a realistic cost. In a structure state prediction apparatus including a processor, the processor performs a data acquisition process of selectively acquiring, from a database that manages chronological images including a first image that is a captured image of a structure and a second image captured before an image-capturing time point of the first image and structure-related data that is data on the structure, the chronological images and the structure-related data related to deterioration of the structure, a first feature quantity calculation process of calculating, from the chronological images, a first feature quantity including at least a degree of progress of damage of the structure, a second feature quantity calculation process of calculating, from the acquired structure-related data, a second feature quantity on the structure, a third feature quantity calculation process of calculating a third feature quantity by combining the first feature quantity and the second feature quantity, and a prediction process of predicting a future state of the structure, based on the third feature quantity.

## Description

### BACKGROUND OF THE INVENTION

### 1. Field of the Invention

The present invention relates to a structure state prediction apparatus, a structure state prediction method, and a structure state prediction program, and more particularly, to a technique of predicting a future state of a structure from a plurality of images (chronological images) or the like of the structure captured at different image-capturing times.

### 2. Description of the Related Art

Maintenance and management of structures such as bridges, tunnels, and dams are shifting from breakdown maintenance to preventive maintenance in order to minimize the life-cycle cost.

An administrator at a local government or the like performs life extension planning and budget leveling, based on a prediction result or the like obtained using a deterioration prediction formula that handles members of each structure (bridge, for example) as a group.

JP6563038B describes an information processing apparatus. The information processing apparatus generates damage information including a vector obtained by vectorizing damage extracted from a captured image of a structure. The information processing apparatus analyzes at least the vector of the damage information of the structure, based on a progress model indicating a correspondence relationship between a damage state and a damage degree of a model structure to acquire a damage degree of the structure corresponding to the damage state of the structure. The information processing apparatus compares a plurality of damage degrees acquired from a plurality of images of the structure at different inspection times to acquire a damage progress speed of the structure.

The information processing apparatus described in JP6563038B includes a progress model generation unit. The progress model generation unit searches a database that stores a damage progress parameter that affects the progress of the damage in association with inspection result information of a structure other than an inspection-target structure, for inspection result information of the other structure of which the damage progress parameter is the same as or similar to that of the inspection-target structure. The progress model generation unit generates a progress model corresponding to the damage progress parameter of the inspection-target structure by using the retrieved inspection result information of the other structure.

Note that the damage progress parameter that affects the progress of the damage described in JP6563038B includes at least one of natural environment information on a natural environment of the inspection-target structure, usage situation information on a usage situation of the structure, structural information on a structural configuration of the structure, material information on a material of the structure, agent information on an agent administered to the structure, or maintenance and management record information on a repair record and a reinforcement record of the structure.

### SUMMARY OF THE INVENTION

Structures such as bridges are each a unique product and have different constructed environments. For this reason, when members of each structure (bridge, for example) are handled as a group, optimization may not be achieved for an individual structure. In addition, JP6563038B describes a technique of grasping a characteristic tendency in a similar structure, for example, a tendency of the damage progress speed or the like. However, this tendency does not necessarily apply to the inspection-target structure.

Therefore, to perform strict deterioration prediction for an individual structure, it is necessary to perform various kinds of sensing or various inspections on each structure and perform deterioration prediction based on the resultant data or the inspection result.

On the other hand, a cost of detailed sensing (for displacement, acceleration, and the like, for example) or detailed investigations for each structure becomes enormous. Therefore, targets of such deterioration prediction may be limited or investigations may fail to reveal factors in the first place. In addition, from a statistical point of view, when all pieces of data obtained by detailed sensing are handled as parameters, a large number of samples are required. Therefore, a prediction model cannot be built simply using a large number of sensing results.

The present invention has been made in view of such a circumstance and an object thereof is to provide a structure state prediction apparatus, a structure state prediction method, and a structure state prediction program that enable highly accurate deterioration prediction to be performed on an individual structure in a versatile manner at a realistic cost.

To this end, according to a first aspect of the invention according, a structure state prediction apparatus includes a processor. The processor is configured to perform a data acquisition process of selectively acquiring, from a database that manages chronological images including a first image that is a captured image of a structure and a second image captured before an image-capturing time point of the first image and structure-related data that is data on the structure, the chronological images and the structure-related data related to deterioration of the structure; a first feature quantity calculation process of calculating, from the chronological images, a first feature quantity including at least a degree of progress of damage of the structure; a second feature quantity calculation process of calculating, from the acquired structure-related data, a second feature quantity on the structure; a third feature quantity calculation process of calculating a third feature quantity by combining the first feature quantity and the second feature quantity; and a prediction process of predicting a future state of the structure, based on the third feature quantity.

According to the first aspect of the present invention, the first feature quantity including the degree of progress of damage of the structure calculated from the chronological images and the second feature quantity on the structure calculated from the structure-related data are independently calculated in parallel, and then the future state of the structure is predicted based on the third feature quantity obtained by combining (integrating) the first feature quantity and the second feature quantity. Thus, highly accurate deterioration prediction can be performed on a prediction-target structure at a realistic cost.

In the structure state prediction apparatus according to a second aspect of the present invention, it is preferable that the third feature quantity calculation process has a plurality of combination methods of combining the first feature quantity and the second feature quantity, and is configured to calculate the third feature quantity by combining the first feature quantity and the second feature quantity using a combination method selected from among the plurality of combination methods in accordance with degrees of contribution of the first feature quantity and the second feature quantity to prediction of the future state of the structure.

According to the second aspect of the present invention, by selecting the combination method of combining the first feature quantity and the second feature quantity in accordance with the degrees of contribution of the first feature quantity and the second feature quantity to prediction of the future state of the structure, a prediction model can be made different in accordance with the degrees of contribution.

In the structure state prediction apparatus according to a third aspect of the present invention, it is preferable that a type of the prediction process includes two or more of a degree of soundness, a remaining life, a degree of damage, and a countermeasure category, the third feature quantity calculation process has a plurality of combination methods of combining the first feature quantity and the second feature quantity and is configured to calculate the third feature quantity by combining the first feature quantity and the second feature quantity using a combination method selected from among the plurality of combination methods in accordance with the type of the prediction process, and the prediction process is configured to predict at least one of the degree of soundness, the remaining life, the degree of damage, or the countermeasure category of the structure.

According to the third aspect of the present invention, by selecting the combination method of combining the first feature quantity and the second feature quantity in accordance with the type of the prediction process, the prediction model can be made different in accordance with the type of the prediction process.

In the structure state prediction apparatus according to a fourth aspect of the present invention, the chronological images are captured images of a same portion or member of the structure, the third feature quantity calculation process has a plurality of combination methods of combining the first feature quantity and the second feature quantity and is configured to calculate the third feature quantity by combining the first feature quantity and the second feature quantity using a combination method selected from among the plurality of combination methods in accordance with a kind of the portion or member, and the prediction process is configured to predict a state of the portion or member of the structure.

According to the fourth aspect of the present invention, by selecting the combination method of combining the first feature quantity and the second feature quantity in accordance with the kind of the portion or member, the prediction model can be made different in accordance with the kind of the portion or member.

In the structure state prediction apparatus according to a fifth aspect of the present invention, it is preferable that the first image and the second image are each an image captured during a periodic inspection of the structure. Since the periodic inspection is performed every predetermined period, an image-capturing interval of the first image and the second image can be matched with the periodic inspection and favorable chronological images can be acquired.

In the structure state prediction apparatus according to a sixth aspect of the present invention, the structure-related data is one or more pieces of data among specification data of the structure, weather data at an installed location of the structure, traffic data related to the structure, an inspection history of the structure, and a repair history and a reinforcement history of the structure.

In the structure state prediction apparatus according to a seventh aspect of the present invention, it is preferable that the first feature quantity calculation process is configured to calculate the first feature quantity using a first neural network trained through supervised learning.

In the structure state prediction apparatus according to an eighth aspect of the present invention, it is preferable that the second feature quantity calculation process is configured to calculate the second feature quantity using a second neural network trained through supervised learning or calculate the second feature quantity by performing dimension compression on the structure-related data.

In the structure state prediction apparatus according to a ninth aspect of the present invention, it is preferable that the third feature quantity calculation process is configured to calculate the third feature quantity by linking the first feature quantity and the second feature quantity.

In the structure state prediction apparatus according to a tenth aspect of the present invention, it is preferable that the third feature quantity calculation process is configured to calculate the third feature quantity by performing weighted addition of the first feature quantity and the second feature quantity.

In the structure state prediction apparatus according to an eleventh aspect of the present invention, it is preferable that the third feature quantity calculation process is configured to calculate the third feature quantity by combining the first feature quantity and the second feature quantity using a third neural network.

In the structure state prediction apparatus according to a twelfth aspect of the present invention, it is preferable that the chronological images include a plurality of chronological images that are sets of captured images of a plurality of portions or members of the structure, each of the sets being captured images of a same portion or member of the structure, and the prediction process is configured to predict a state of the entire structure.

In the structure state prediction apparatus according to a thirteenth aspect of the present invention, it is preferable that the chronological images include three or more images having the first image and the second image.

In the structure state prediction apparatus according to a fourteenth aspect of the present invention, it is preferable that the processor is configured to perform an output process of outputting the predicted future state of the structure to a display or a printer, or store the predicted future state of the structure in a memory. This is for the purpose of performing preventive maintenance of the structure in accordance with the predicted future state of the structure.

According to a fifteenth aspect of the present invention, a structure state prediction method includes a step of selectively acquiring, from a database that manages chronological images including a first image that is a captured image of a structure and a second image captured before an image-capturing time point of the first image and structure-related data that is data on the structure, the chronological images and the structure-related data related to deterioration of the structure; a step of calculating, from the chronological images, a first feature quantity including at least a degree of progress of damage of the structure; a step of calculating, from the acquired structure-related data, a second feature quantity on the structure; a step of calculating a third feature quantity by combining the first feature quantity and the second feature quantity; and a step of predicting a future state of the structure, based on the third feature quantity, wherein each step is performed by a processor.

According to a sixteenth aspect of the present invention, a structure state prediction program causes a computer to implement a function of selectively acquiring, from a database that manages chronological images including a first image that is a captured image of a structure and a second image captured before an image-capturing time point of the first image and structure-related data that is data on the structure, the chronological images and the structure-related data related to deterioration of the structure; a function of calculating, from the chronological images, a first feature quantity including at least a degree of progress of damage of the structure; a function of calculating, from the acquired structure-related data, a second feature quantity related to a future state of the structure; a function of calculating a third feature quantity by combining the first feature quantity and the second feature quantity; and a function of predicting a future state of the structure, based on the third feature quantity.

The present invention enables highly accurate deterioration prediction to be performed on a prediction-target structure in a versatile manner at a realistic cost.

### BRIEF DESCRIPTION OF THE DRAWINGS

Fig. 1 is a block diagram illustrating a hardware configuration of a structure state prediction apparatus according to an embodiment the present invention;
Fig. 2 is a functional block diagram illustrating a structure state prediction apparatus according to a first embodiment of the present invention;
Fig. 3 is a table illustrating an example of a prediction result output by the structure state prediction apparatus;
Fig. 4 is a graph illustrating an example of the prediction result output by the structure state prediction apparatus;
Fig. 5 is another graph illustrating an example of the prediction result output by the structure state prediction apparatus;
Fig. 6 is still another graph illustrating an example of the prediction result output by the structure state prediction apparatus;
Fig. 7 is a functional block diagram illustrating a structure state prediction apparatus according to a second embodiment of the present invention;
Fig. 8 is a functional block diagram illustrating a structure state prediction apparatus according to a third embodiment of the present invention; and
Fig. 9 is a flowchart illustrating a structure state prediction method according to an embodiment of the present invention.

### DESCRIPTION OF THE PREFERRED EMBODIMENTS

A structure state prediction apparatus, a structure state prediction method, and a structure state prediction program according to preferred embodiments of the present invention will be described below with reference to the accompanying drawings.

### Hardware Configuration of Structure State Prediction Apparatus

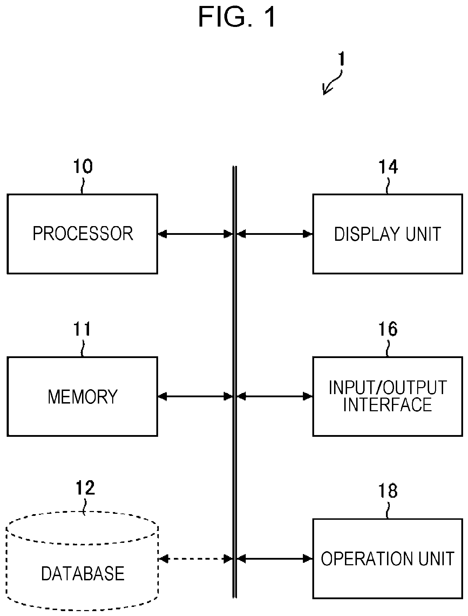

Fig. 1 is a block diagram illustrating a hardware configuration of a structure state prediction apparatus according to an embodiment of the present invention.

As illustrated in Fig. 1, a structure state prediction apparatus 1 is provided for maintenance and management of a structure such as a bridge, a tunnel, or a dam, and predicts a future state of a management-target structure. The structure state prediction apparatus 1 is constituted by a personal computer, a workstation, or the like, and includes a processor 10, a memory 11, a database 12, a display unit (display) 14, an input/output interface 16, an operation unit 18, and so on.

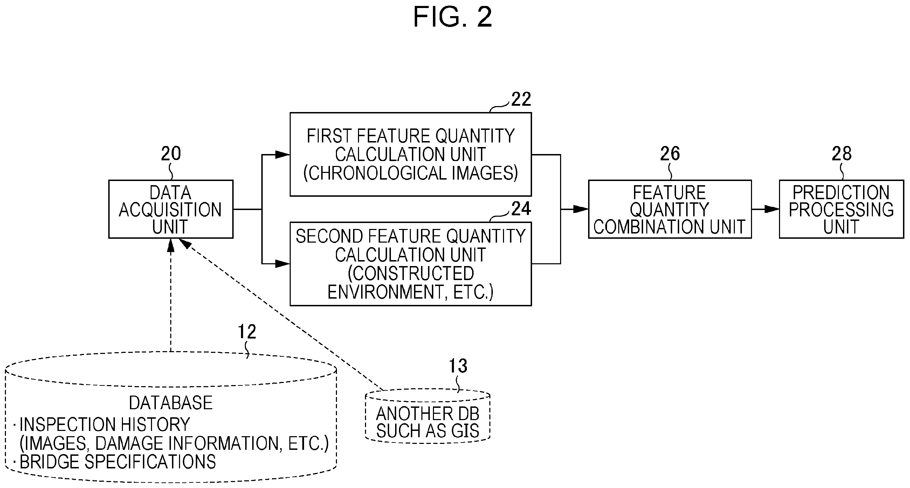

The processor 10 is constituted by a central processing unit (CPU) or the like. The processor 10 integrally controls each unit of the structure state prediction apparatus 1. The processor 10 also functions as, for example, a data acquisition unit 20, a first feature quantity calculation unit 22, a second feature quantity calculation unit 24, a feature quantity combination unit 26, and a prediction processing unit 28 illustrated in Fig. 2.

The memory 11 includes a flash memory, a read-only memory (ROM), a random access memory (RAM), a hard disk apparatus, and so on. The flash memory, the ROM, or the hard disk apparatus is a nonvolatile memory that stores an operation system, various programs including a structure state prediction program according to the present invention, and so on. The RAM functions as a work area for processing by the processor 10. The RAM also temporarily stores the structure state prediction program or the like stored in the flash memory or the like. Note that the processor 10 may include a part (RAM) of the memory 11 therein.

The database 12 is a unit that stores and manages chronological images including a first image that is a captured image of a structure and a second image captured before an image-capturing time point of the first image, structure-related data that is data on the structure, and so on. The database 12 stores and manages the chronological images, the structure-related data, and so on for each management-target structure.

Note that details of the chronological images and the structure-related data will be described later. The database 12 may be included in the structure state prediction apparatus 1, or may be provided separately outside the structure state prediction apparatus 1. The number of the databases 12 is not limited to one, and the database 12 may be constituted by a plurality of databases separately managed according to stored and managed contents such as the chronological images and the structure-related data.

In accordance with the structure state prediction program, by using the RAM as the work area, the processor 10 acquires necessary data such as the chronological images and the structure-related data from the database 12, and performs control and processing of each unit of the structure state prediction apparatus 1.

The display unit 14 displays a future state of the structure predicted by the processor 10. By checking the future state of the structure displayed by the display unit 14, a user can perform appropriate preventive maintenance, life extension planning, and the like for the structure. Note that the display unit 14 is also used as part of a graphical user interface (GUI) for accepting designation of a prediction-target structure or the like via the operation unit 18.

The input/output interface 16 includes a connection connectable to an external device, a communication unit connectable to a network, and the like. As the connection unit connectable to an external device, a Universal Serial Bus (USB), an HDMI (High -Definition Multimedia Interface) (HDMI (registered trademark)), or the like can be used. The processor 10 can acquire desired structure-related data and the like via the input/output interface 16. Instead of the display unit 14, an external display device connected to the input/output interface 16 can be used.

The operation unit 18 includes a keyboard, a pointing device such as a mouse, a keyboard, and the like, and functions as part of the GUI for accepting various kinds of designation from a user.

### Structure State Prediction Apparatus According to First Embodiment

Fig. 2 is a functional block diagram illustrating a structure state prediction apparatus according to a first embodiment of the present invention.

In the structure state prediction apparatus according to the first embodiment illustrated in Fig. 2, the processor 10 of the structure state prediction apparatus 1 having the hardware configuration illustrated in Fig. 1 functions as the data acquisition unit 20, the first feature quantity calculation unit 22, the second feature quantity calculation unit 24, the feature quantity combination unit 26, and the prediction processing unit 28.

The data acquisition unit 20 is a unit that performs, in response to acceptance of designation of a prediction-target structure from a GUI operated by a user, a data acquisition process of acquiring chronological images and structure-related data of the designated structure from the database 12.

As described above, the database 12 is a unit that stores and manages, for each structure, chronological images that are captured images of the structure and the structure-related data. A specific example of the chronological images and the structure-related data in the case where the structure is a bridge will be described below.

### Chronological Images

The chronological images are two or more images captured at different image-capturing times and including a first image that is a captured image of a specific portion of the structure (bridge) and a second image captured before an image-capturing time point of the first image.

### · Image-capturing intervals: 1 year, 5 years, or the like

Note that if the progress of damage is fast, image-capturing or recording may be performed at a shorter interval (of one day or one month, for example).

### · Image-capturing conditions: capturing an image of the same portion or member of the bridge

As the chronological images, for example, close-up images of a specific portion of the bridge captured during a periodic inspection of the bridge performed every year can be used. Although a manual or a mark for the image-capturing target are present, all the imaging conditions need not be strictly uniform. Therefore, "the same portion or member" indicates that an image just needs to include the portion or member, and does not necessarily indicate strictly "the same".

### Structure-Related Data

The structure-related data is one or more pieces of data among specification data of a structure, weather data at an installed location of the structure, traffic data related to the structure, an inspection history of the structure, and a repair history and a reinforcement history of the structure.

.Bridge specification data: a construction year, a location, a construction type, a type (a girder bridge, a rigid-frame bridge, a truss bridge, an arch bridge, a cable-stayed bridge, or a suspension bridge), a material (such as steel, reinforced concrete, or prestressed concrete (PC)), and drawings (such as computer-aided design (CAD))
·Inspection history: a type of damage, a degree of soundness, a remaining life, a degree of damage, and a countermeasure category
·Repair history and reinforcement history: Repair and reinforcement methods
·Weather data: a rainfall, a snow accumulation, a river flow rate, a wind direction/wind speed, and an amount of airborne salt
·Traffic data: a traffic volume (per day, per month, per year, cumulative, etc.), a vehicle type, and a load capacity
·Others: inspection information (monitoring information such as a deflection of the structure, an amplitude of vibration of the structure, and a period of vibration of the structure) and data on similar bridges

Note that the chronological images and the structure-related data are not limited to the aforementioned examples. In addition, the structure-related data differs depending on the type of the structure (such as a bridge, a tunnel, or a dam).

The data acquisition unit 20 may acquire part of the structure-related data from another database 13. For example, the data acquisition unit 20 can acquire, through a geographic information system (GIS), information related to geographic information of a bridge (a distance from a shoreline) from the Geospatial Information Authority of Japan, public data (a rainfall, a humidity, a wind direction, and a wind speed) of the Japan Meteorological Agency, and public data (traffic data) of the Ministry of Land, Infrastructure, Transport and Tourism.

The chronological images acquired from the database 12 by the data acquisition unit 20 are output to the first feature quantity calculation unit 22. The structure-related data is output to the second feature quantity calculation unit 24.

The first feature quantity calculation unit 22 is a unit that performs a first feature quantity calculation process of calculating, from the input chronological images, a first feature quantity including at least a degree of progress of damage of the structure.

The first feature quantity calculation unit 22 can be constituted by a convolution neural network (CNN) or a recurrent neural network (RNN), which is a first neural network trained through supervised learning.

The conceivable first feature quantity extracted from the chronological images is as follows.
·Degree of progress of damage: Minor progress, in progress, no progress, progress unknown
·Degree of damage: five-level evaluation according to the inspection manual of Nagasaki prefecture, for example
·Damage percentage: 0% to 100% (in units of 10%) according to the inspection manual of Nagasaki prefecture, for example
·Damaged region: segmentation representing a damaged portion in units of pixels and/or by polygonal shapes
·Image feature quantity: an intermediate feature quantity of the trained model based on the image database of a large number of color images

The first feature quantity calculation unit 22 calculates the first feature quantity including the degree of progress of damage of the structure from individual images included in the chronological images by using the CNN or the like, or acquires the first feature quantity indicating overall deterioration prediction of the structure by using the CNN, the RNN, or the like through supervised learning.

The second feature quantity calculation unit 24 is a unit that performs a second feature quantity calculation process of calculating, from the structure-related data input thereto, a second feature quantity related to a future state of the structure.

The second feature quantity calculation unit 24 calculates the second feature quantity from data selected as data related to deterioration of the structure among the structure-related data. For example, among the structure structure-related data, the second feature quantity calculation unit 24 calculates accumulated values of time-series weather data, traffic data, or the like for the entire period and uses specification data as it is to calculate the second feature quantity by performing dimension compression through principal component analysis (PCA) or the like. Alternatively, the second feature quantity calculation unit 24 acquires, through supervised learning, the second feature quantity indicating overall deterioration prediction of the structure by using an RNN or the like, which is a second neural network trained through supervised learning.

The feature quantity of the weather data included in the structure-related data is a cumulative value, a moving average value, a maximum value, a minimum value, or the like.

The feature quantity combination unit 26 that functions as a third feature quantity calculation processing unit calculates a third feature quantity by combining the first feature quantity calculated by the first feature quantity calculation unit 22 and the second feature quantity calculated by the second feature quantity calculation unit 24.

The feature quantity combination unit 26 has a plurality of combination methods of combining the first feature quantity and the second feature quantity, and calculates the third feature quantity by combining the first feature quantity and the second feature quantity using a combination method selected from among the plurality of combination methods.

### Plurality of Combination Methods

·Linkage of the first feature quantity and the second feature quantity
·Weighted addition of the first feature quantity and the second feature quantity
· Integration by a neural network (third neural network)

The various feature quantities of the first feature quantity and the second feature quantity described above are integrated in a fully connected layer, an embedding layer, a convolution layer, and a pooling layer of the neural network.

For example, the feature quantity combination unit 26 selects one combination method from among the plurality of combination methods such as the "linkage", the "weighted addition", and the "neural network" described above.

A conceivable method of selecting the combination method may be
(1) a selection method according to degrees of contribution of the first feature quantity and the second feature quantity to prediction of the future state of the structure,
(2) a selection method according to a type of a prediction process (such as a degree of soundness (soundness), a remaining life, a degree of damage, or a countermeasure category of the structure), or
(3) a selection method according to a kind of a portion or member of the structure in the case of predicting the state of the portion or member of the structure.

When the combination method is selected according to (1) above, a combination method such as the "linkage", the "weighted addition", or the "neural network" can be selected in a following manner in accordance with the degrees of contribution of the first feature quantity and the second feature quantity to prediction of the future state of the structure.
. Linkage: the second feature quantity has a smaller degree of contribution than the first feature quantity
·Weighted addition: the second feature quantity has a greater degree of contribution than the first feature quantity
·Neural network: the first feature quantity and the second feature quantity have the same degree of contribution

As for the "type of the prediction process" used when the combination method is selected according to (2) above, in response to acceptance of a user's selection of the type of the prediction process via a GUI, the combination method may be selected according to the user's selection, or the combination method may be automatically selected.

Likewise, as for the "kind of the portion or member of the structure" used when the combination method is selected according to (3) above, in response to acceptance of a user's selection of a kind of a portion or member of the structure via a GUI, the combination method may be selected according to the user's selection, or the combination method may be automatically selected.

The feature quantity combination unit 26 calculates the third feature quantity by combining the first feature quantity and the second feature quantity using the combination method selected from among the plurality of combination methods in the above-described manner. Thus, the prediction model can be made different in accordance with the degrees of contribution of the first feature quantity and the second feature quantity, the type of the prediction process, or the kind of the portion or member of the structure.

The prediction processing unit 28 performs a prediction process of predicting the future state of the structure, based on the third feature quantity obtained through combination (calculation) by the feature quantity combination unit 26.

The prediction processing unit 28 can be constituted by an RNN or the like, which is a fourth neural network trained through supervised learning at the same time as the above-described combination of the feature quantities. In response to receiving the third feature quantity from the feature quantity combination unit 26, the prediction processing unit 28 outputs a prediction result for one or more types of the prediction process among the degree of soundness (soundness), the remaining life, the degree of damage, and the countermeasure category of the structure.

An evaluation level determined by a country or a local government is preferably used as the evaluation level of the degree of soundness (soundness), the remaining life, the degree of damage, or the countermeasure category of the structure.

When "the degree of soundness" is designated as the type of the prediction process via a GUI operated by the user, the prediction processing unit 28 can predict the degree of soundness evaluated in five levels from 1 to 5, for example, as the future state of the structure and output the degree of soundness of N years later. Here, N is a natural number.

The processor 10 (Fig. 1) performs an output process of outputting the future state of the structure predicted by the prediction processing unit 28 to the display unit 14 or a printer (not illustrated) or of storing the future state in the memory 11 or the database 12.

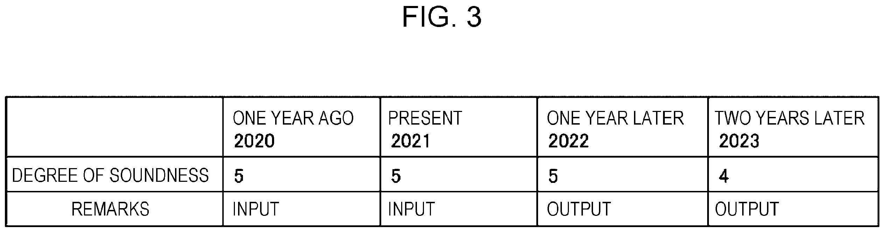

Fig. 3 is a table illustrating an example of the prediction result output by the structure state prediction apparatus.

In the example illustrated in Fig. 3, the structure state prediction apparatus 1 receives chronological images and structure-related data of the present (for example, 2021) and one year ago (2020), and outputs prediction results of the degrees of soundness of one layer later (2022) and two years later (2023) together with the degrees of soundness of the present and one year ago as a table. As the degrees of soundness of the present and one year ago, an inspection history included in the structure-related data of the present and one year ago can be used.

The table illustrated in Fig. 3 indicates that the degree of soundness of one year later is "5", which is the same as the degree of soundness at the present and one year ago, but the degree of soundness of two years later decreases to "4".

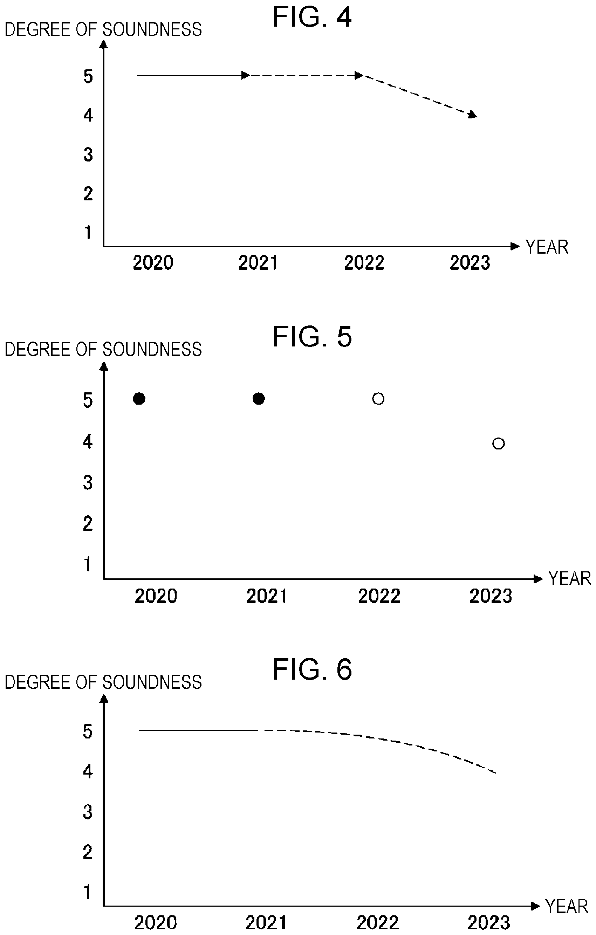

Figs. 4 to 6 are graphs each illustrating an example of the prediction result output by the structure state prediction apparatus.

The vertical axis of the graphs of Figs. 4 to 6 represents an evaluation level of the degree of soundness, and the horizontal axis of the graphs represents the year of inspection of the structure or the elapsed years from construction.

The graph illustrated in Fig. 4 represents the degree of soundness by discrete values (lines). The degree of soundness from one year ago to the present is represented by a "solid line", and the predicted degree of soundness is represented by a "dash line".

The graph illustrated in Fig. 5 represents the degree of soundness by discrete values (points). The degrees of soundness one year ago (2020) and at the present (2021) are represented by "black dots", and the predicted degrees of soundness one year later (2022) and two years later (2023) are represented by "white dots".

The graph illustrated in Fig. 6 represents the degree of soundness by a continuous value (curve). The degree of soundness from one year ago (2020) to the present (2021) is represented by a "solid line", and the predicted degree of soundness is represented by a "dash line".

By grasping the future state of the structure with reference to the table illustrated in Fig. 3, the graphs illustrated in Figs. 4 to 6, or the like, the user can perform appropriate preventive maintenance, life extension planning, and the like for the prediction-target structure.

### Structure State Prediction Apparatus According to Second Embodiment

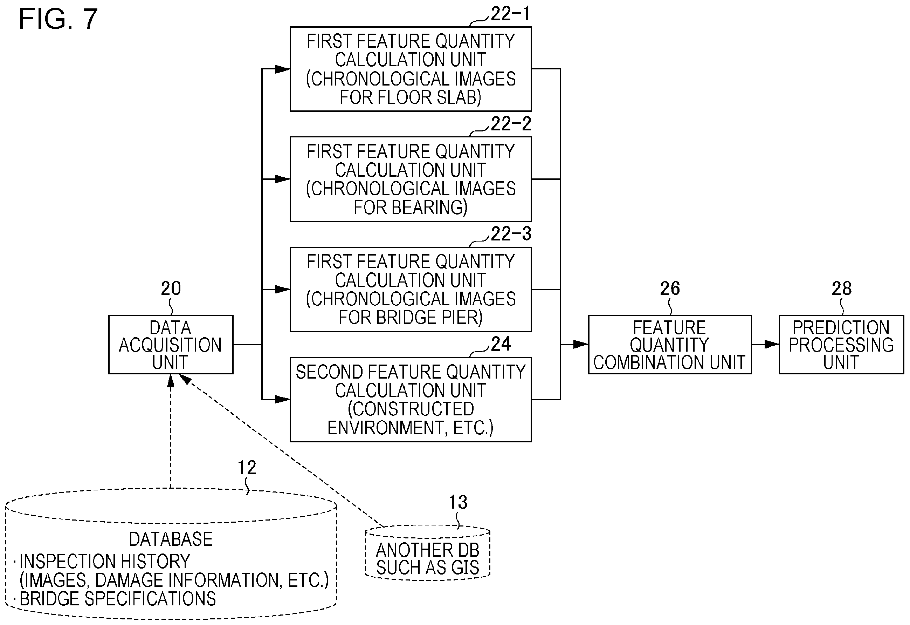

Fig. 7 is a functional block diagram illustrating a structure state prediction apparatus according to a second embodiment of the present invention.

The structure state prediction apparatus according to the first embodiment illustrated in Fig. 2 predicts the state of a portion or member of a structure, based on chronological images of the portion or member of the structure and the structure-related data. In contrast, the structure state prediction apparatus according to the second embodiment illustrated in Fig. 7 predicts a state of the entire structure, based on a plurality of chronological images that are captured images of a plurality of portions or members of the structure and structure-related data corresponding thereto.

As illustrated in Fig. 7, the structure state prediction apparatus according to the second embodiment is provided with first feature quantity calculation units 22-1, 22-2, and 22-3 each for a corresponding one of the plurality of portions (a floor slab, a bearing, and a bridge pier in this example) of the structure.

The data acquisition unit 20 acquires chronological images for the floor slab, chronological images for the bearing, and chronological images for the bridge pier from the database 12, outputs the chronological images for the floor slab to the first feature quantity calculation unit 22-1, outputs the chronological images for the bearing to the first feature quantity calculation unit 22-2, and outputs the chronological images for the bridge pier to the first feature quantity calculation unit 22-3.

The first feature quantity calculation units 22-1, 22-2, and 22-3 calculate, from the chronological images for the floor slab, the chronological images for the bearing, and the chronological image for the bridge pier respectively input thereto, first feature quantities corresponding to the respective chronological images.

The feature quantity combination unit 26 calculates a third feature quantity by combining the three first feature quantities output from the first feature calculation units 22-1, 22-2, and 22-3 and a second feature quantity output from the second feature quantity calculation unit 24. The feature quantity combination unit 26 has a plurality of combination methods as in the first embodiment, and calculates the third feature quantity by combining the three first feature quantities and the one second feature quantity using a combination method selected from among the plurality of combination methods.

In response to receiving the third feature quantity calculated by the feature quantity combination unit 26, the prediction processing unit 28 outputs one or more of the degree of soundness (soundness), the remaining life, the degree of damage, and the countermeasure category of the entire structure as a prediction result.

Although the number of second feature quantity calculation units 24 is one in the second embodiment, the second feature quantity calculation unit 24 may be provided for each portion of the structure, similarly to the first feature quantity calculation units 22-1, 22-2, and 22-3.

### Structure State Prediction Apparatus According to Third Embodiment

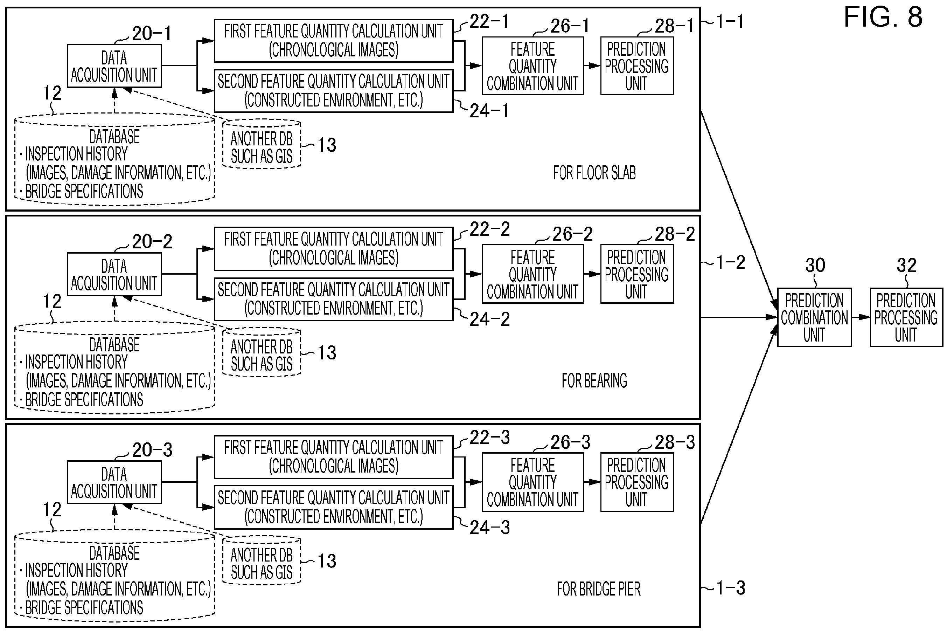

Fig. 8 is a functional block diagram illustrating a structure state prediction apparatus according to a third embodiment of the present invention.

The structure state prediction apparatus according to the third embodiment illustrated in Fig. 8 and the structure state prediction apparatus according to the second embodiment illustrated in Fig. 7 are that same in that they output a prediction result such as the degree of soundness of the entire structure but are different in that the structure state prediction apparatus according to the third embodiment predicts the future state of the entire structure by combining prediction results of the future states predicted for the respective portions of the structure.

The structure state prediction apparatus according to the third embodiment illustrated in Fig. 8 includes three structure state prediction apparatuses 1-1, 1-2, and 1-3, a prediction combination unit 30, and a prediction processing unit 32.

The structure state prediction apparatuses 1-1, 1-2, and 1-3 individually predict respective future states of different portions (such as the "floor slab", the "bearing", and the "bridge pier") of the bridge.

That is, the structure state prediction apparatus 1-1 has a data acquisition unit 20-1, a first feature quantity calculation unit 22-1, a second feature quantity calculation unit 24-1, a feature quantity combination unit 26-1, and a prediction processing unit 28-1 for the floor slab, and outputs a prediction result of a future state of the floor slab.

Likewise, the structure state prediction apparatus 1-2 has a data acquisition unit 20-2, a first feature quantity calculation unit 22-2, a second feature quantity calculation unit 24-2, a feature quantity combination unit 26-2, and a prediction processing unit 28-2 for the bearing, and outputs a prediction result of a future state of the bearing. The structure state prediction apparatus 1-3 has a data acquisition unit 20-3, a first feature quantity calculation unit 22-3, a second feature quantity calculation unit 24-3, a feature quantity combination unit 26-3, and a prediction processing unit 28-3 for the bridge pier, and outputs a prediction result of a future state of the bridge pier.

The prediction combination unit 30 combines the prediction results for the respective portions of the bridge output from the three structure state prediction apparatuses 1-1, 1-2, and 1-3. The combining in the prediction combination unit 30 can be performed by a selection method of one combination method from among a plurality of combination methods such as the "linkage", the "weighted addition", and the "neural network".

The prediction processing unit 32 is constituted by a neural network trained through supervised learning, and predicts a future state of the entire structure from the combination of the prediction results for the respective portions of the structure.

### Structure State Prediction Method

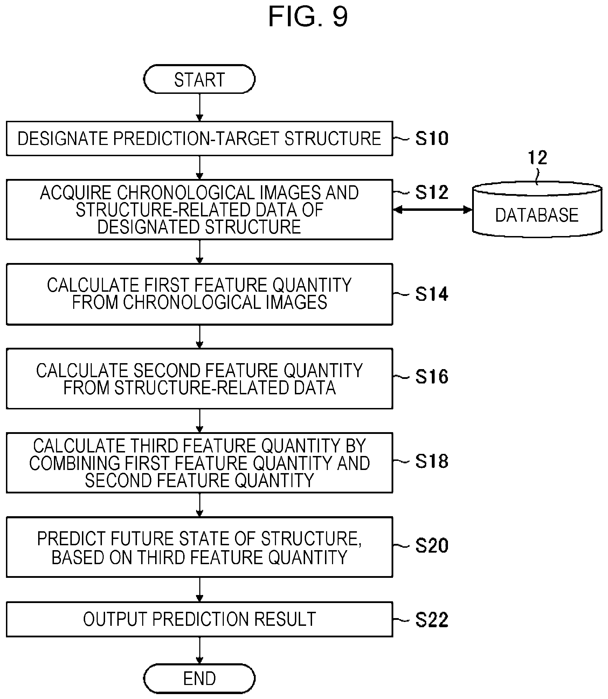

Fig. 9 is a flowchart illustrating a structure state prediction method according to an embodiment of the present invention. Note that processing of each step illustrated in Fig. 9 is performed by the processor 10 of the structure state prediction apparatus 1 illustrated in Fig. 1.

In Fig. 9, a user designates a prediction-target structure using a GUI, and the processor 10 accepts the user's designation of the prediction-target structure via the GUI (step S10). The processor 10 acquires chronological images and structure-related data of the designated structure from the database 12 (step S12).

The processor 10 calculates a first feature quantity including at least a degree of progress of damage of the structure from the chronological images (step S14). The processor 10 also calculates a second feature quantity related to a future state of the structure from the structure-related data (step S16). The calculation order of the first feature quantity and the second feature quantity is not limited to the above order, and the first feature quantity and the second feature quantity may be independently calculated in parallel.

The processor 10 calculate a third feature quantity by combining the first feature quantity and the second feature quantity respectively calculated in steps S14 and S16 (step S18). As the combination method of combining the first feature quantity and the second feature quantity, a method selected from among the plurality of combination methods such as the "linkage", the "weighted addition", and the "neural network" can be used.

Subsequently, the processor 10 predicts a future state of the structure, based on the third feature quantity calculated in step S18 (step S20). The processor 10 can be constituted by a neural network trained through supervised learning, and predicts one or more of the degree of soundness, the remaining life, the degree of damage, and the countermeasure category of the structure in response to receiving the third feature quantity.

The processor 10 then outputs the predicted future state of the structure to the display unit 14 or a printer (not illustrated), or stores the predicted future state of the structure in the memory 11 (or the database 12) (step S22).

The user can check the output future state of the structure, and thus can perform appropriate preventive maintenance, life extension planning, and the like for the prediction-target structure.

### Others

In the present embodiments, the first image that is a captured image of a structure and the second image captured before the image-capturing time point of the first image are acquired as the chronological images. However, the chronological images are not limited to these images, and three or more images having the first image and the second image may be acquired.

In the present embodiments, for example, a hardware structure of the processing units such as a CPU that executes various processes is various processors as described below. The various processors include, for example, a central processing unit (CPU) which is a general-purpose processor that executes software (program) to function as the various processing units; a programmable logic device (PLD) which is a processor whose circuit configuration is changeable after manufacture, such as a field programmable gate array (FPGA); and a dedicated electric circuit which is a processor having a circuit configuration designed exclusively for executing a specific process, such as an application-specific integrated circuit (ASIC).

A single processing unit may be implemented by one of these various processors, or may be implemented by two or more processors of the same kind or of different kinds (for example, a plurality of FPGAs or a combination of a CPU and an FPGA). In addition, the plurality of processing units may be implemented by a single processor. Examples in which the plurality of processing units are implemented by a single processor include a first configuration, as exemplified by a computer such as a client or a server, in which a combination of one or more CPUs and software constitutes a single processor and this processor functions as the plurality of processing units. The examples also include a second configuration, as exemplified by a system on chip (SoC) or the like, in which a processor that implements the functions of the entire system including the plurality of processing units with a single integrated circuit (IC) chip is used. As described above, the various processing units are constituted by using one or more of the various processors described above in terms of the hardware structure.

More specifically, the hardware structure of these various processors is electric circuitry in which circuit elements such as semiconductor elements are combined.

The present invention includes the structure state prediction program that is installed on a computer to cause the computer to function as the structure state prediction apparatus according to the present invention, and a nonvolatile storage medium in which this structure state prediction program is recorded.

Furthermore, the present invention is not limited to the embodiments described above, and obviously, various modifications can be made within a scope not departing from the spirit of the present invention.

### Reference Signs List

1, 1-1, 1-2, 1-3 structure state prediction apparatus
10 processor
11 memory
12, 13 database
14 display unit
16 input/output interface
18 operation unit
20, 20-1, 20-2, 20-3 data acquisition unit
22, 22-1, 22-2, 22-3 first feature quantity calculation unit
24, 24-1, 24-2, 24-3 second feature quantity calculation unit
26, 26-1, 26-2, 26-3 feature quantity combination unit
28, 28-1, 32 prediction processing unit
30 prediction combination unit
S10-S22 step

## Claims

1. A structure state prediction apparatus comprising:
a processor configured to:
selectively acquire, from a database that manages chronological images including a first image that is a captured image of a structure and a second image captured before an image-capturing time point of the first image and structure-related data that is data on the structure, the chronological images and the structure-related data related to deterioration of the structure;
calculate, from the chronological images, a first feature quantity including at least a degree of progress of damage of the structure;
calculate, from the acquired structure-related data, a second feature quantity on the structure;
calculate a third feature quantity by combining the first feature quantity and the second feature quantity; and
predict a future state of the structure, based on the third feature quantity.

2. The structure state prediction apparatus according to claim 1, wherein the processor
has a plurality of combination methods of combining the first feature quantity and the second feature quantity, and
is configured to calculate the third feature quantity by combining the first feature quantity and the second feature quantity using a combination method selected from among the plurality of combination methods in accordance with degrees of contribution of the first feature quantity and the second feature quantity to prediction of the future state of the structure.

3. The structure state prediction apparatus according to claim 1, wherein
a type of a prediction process includes two or more of a degree of soundness, a remaining life, a degree of damage, and a countermeasure category, and
the processor
has a plurality of combination methods of combining the first feature quantity and the second feature quantity,
is configured to calculate the third feature quantity by combining the first feature quantity and the second feature quantity using a combination method selected from among the plurality of combination methods in accordance with the type of the prediction process, and
is configured to predict at least one of the degree of soundness, the remaining life, the degree of damage, or the countermeasure category.

4. The structure state prediction apparatus according to claim 1, wherein
the chronological images are captured images of a same portion or member of the structure, and
the processor
has a plurality of combination methods of combining the first feature quantity and the second feature quantity,
is configured to calculate the third feature quantity by combining the first feature quantity and the second feature quantity using a combination method selected from among the plurality of combination methods in accordance with a kind of the portion or member, and
is configured to predict a state of the portion or member of the structure.

5. The structure state prediction apparatus according any one of claims 1 to 4, wherein the first image and the second image are each an image captured during a periodic inspection of the structure.

6. The structure state prediction apparatus according to any one of claims 1 to 5, wherein the structure-related data is one or more pieces of data among specification data of the structure, weather data at an installed location of the structure, traffic data related to the structure, an inspection history of the structure, and a repair history and a reinforcement history of the structure.

7. The structure state prediction apparatus according to any one of claims 1 to 6, wherein the processor is configured to calculate the first feature quantity using a first neural network trained through supervised learning.

8. The structure state prediction apparatus according to any one of claims 1 to 7, wherein the processor is configured to calculate the second feature quantity using a second neural network trained through supervised learning or calculate the second feature quantity by performing dimension compression on the structure-related data.

9. The structure state prediction apparatus according to any one of claims 1 to 8, wherein the processor is configured to calculate the third feature quantity by linking the first feature quantity and the second feature quantity.

10. The structure state prediction apparatus according to any one of claims 1 to 8, wherein the processor is configured to calculate the third feature quantity by performing weighted addition of the first feature quantity and the second feature quantity.

11. The structure state prediction apparatus according to any one of claims 1 to 8, wherein the processor is configured to calculate the third feature quantity by combining the first feature quantity and the second feature quantity using a third neural network.

12. The structure state prediction apparatus according to any one of claims 1 to 11, wherein
the chronological images include a plurality of chronological images that are sets of captured images of a plurality of portions or members of the structure, each of the sets being captured images of a same portion or member of the structure, and
the processor is configured to predict a state of the entire structure.

13. The structure state prediction apparatus according to any one of claims 1 to 12, wherein the chronological images include three or more images having the first image and the second image.

14. The structure state prediction apparatus according to any one of claims 1 to 13, wherein the processor is configured to output the predicted future state of the structure to a display or a printer, or store the predicted future state of the structure in a memory.

15. A structure state prediction method comprising:
selectively acquiring, from a database that manages chronological images including a first image that is a captured image of a structure and a second image captured before an image-capturing time point of the first image and structure-related data that is data on the structure, the chronological images and the structure-related data related to deterioration of the structure;
calculating, from the chronological images, a first feature quantity including at least a degree of progress of damage of the structure;
calculating, from the acquired structure-related data, a second feature quantity on the structure;
calculating a third feature quantity by combining the first feature quantity and the second feature quantity; and
predicting a future state of the structure, based on the third feature quantity.

16. A structure state prediction program comprising:
selectively acquiring, from a database that manages chronological images including a first image that is a captured image of a structure and a second image captured before an image-capturing time point of the first image and structure-related data that is data on the structure, the chronological images and the structure-related data related to deterioration of the structure;
calculating, from the chronological images, a first feature quantity including at least a degree of progress of damage of the structure;
calculating, from the acquired structure-related data, a second feature quantity on the structure;
calculating a third feature quantity by combining the first feature quantity and the second feature quantity; and
predicting a future state of the structure, based on the third feature quantity.
